# EUROPÄISCHE PATENTSCHRIFT

(11) **EP 2 334 506 B1**
(45) Veröffentlichungstag und Bekanntmachung des Hinweises auf die Patenterteilung: **26.06.2013**
(21) Anmeldenummer: 09781171.5
(22) Anmeldetag: 28.07.2009
(51) Int. Cl.: B60K 6/38

(54) **VERFAHREN ZUM BETRIEB EINES ANTRIEBES MIT EINER ELEKTRISCH ANTREIBBAREN ACHSE**
METHOD FOR THE OPERATION OF A DRIVE UNIT COMPRISING AN ELECTRICALLY DRIVABLE AXLE
PROCÉDÉ DE FONCTIONNEMENT D'UN SYSTÈME D'ENTRAÎNEMENT COMPRENANT UN ESSIEU À ENTRAÎNEMENT ÉLECTRIQUE

(30) Priorität: 12.09.2008 DE 102008042056
(43) Veröffentlichungstag der Anmeldung: 22.06.2011
(73) Patentinhaber: Robert Bosch GmbH, 70442 Stuttgart (DE)
(72) Erfinder: TELLERMANN, Uwe, 70499 Stuttgart-Weilimdorf (DE); SCHMOLL GENANNT EISENWERTH, Kaspar, 74343 Sachsenheim (DE)
(86) Internationale Anmeldenummer: PCT/EP2009/059722
(87) Internationale Veröffentlichungsnummer: WO 2010/028908

(56) Entgegenhaltungen:
- EP-A1- 0 224 144
- EP-A2- 1 122 110
- WO-A1-01/07278
- WO-A2-01/83249
- DE-A1- 19 915 370
- DE-A1-102006 031 089
- DE-A1-102006 044 427
- DE-A1-102007 010 370
- US-A- 6 008 606
- US-A1- 2004 154 853

## Beschreibung

### Stand der Technik

Die Erfindung betrifft ein Verfahren zum Betrieb eines Antriebes mit einer elektrisch antreibbaren Achse, beispielsweise in einem Hybridfahrzeug. Fahrzeuge mit einer hybriden Antriebsstruktur weisen mindestens zwei Antriebsaggregate auf. Meist sind dies ein Verbrennungsmotor und mindestens ein Elektromotor. Aber auch der Einsatz anderer Antriebsaggregate, wie beispielsweise Hydraulikmotoren, ist möglich. So kann das Antriebsmoment während des Fahrbetriebes des Hybridfahrzeuges von beiden Antriebsaggregaten oder auch nur von einem einzelnen aufgebracht werden. Aus der EP 0 224 144 A1 ist ein Fahrzeug bekannt, welches eine herkömmliche, durch einen Verbrennungsmotor antreibbare Hauptantriebsachse aufweist. Bei erhöhtem Schlupf der Räder der Hauptantriebsachse können die Räder einer zuschaltbaren Antriebsachse mittels eines gesonderten Zusatzantriebsaggregates, insbesondere eines Elektromotors, automatisch angetrieben werden.

Aus dem Stand der Technik ist weiterhin die dem Oberbegriff des Anspruchs 1 definierende EP 1 122 110 A2 bekannt, welche eine Kraftübertragungseinrichtung für Kraftfahrzeuge betrifft. Diese Kraftübertragungseinrichtung umfasst eine Brennkraftmaschine, eine Gangwechseleinrichtung zwischen der Brennkraftmaschine und einem Antriebsstrang, eine elektrische Maschine, welche an eine Ausgangswelle der Brennkraftmaschine und an den Antriebsstrang über die Gangwechseleinrichtung angeschlossen ist sowie eine Kupplung zwischen einer Eingangswelle und einer Ausgangswelle der Gangwechseleinrichtung, mit welcher ein Übertragungsmoment zwischen der Eingangswelle und der Ausgangswelle anpassbar ist.

### Offenbarung der Erfindung

Bei dem Verfahren für ein Fahrzeug, welches eine elektrische Maschine und eine von dieser elektrischen Maschine antreibbare Achse aufweist, wobei eine trennbare mechanische Kopplung zwischen der antreibbaren Achse und der elektrischen Maschine vorgesehen ist, ist die mechanische Kopplung als Klauenkupplung ausgebildet und die Klauenkupplung wird in Abhängigkeit des Betriebszustandes des Fahrzeuges angesteuert. Damit wird ein ständiges Mitlaufen der elektrischen Maschine vermieden.

Weiter werden mindestens die Betriebszustände des Fahrzeugs "Beschleunigen" und "Rekuperieren" erkannt. Technischer Hintergrund dieser Ausgestaltung ist, dass der Beschleunigungsvorgang mittels der elektrischen Maschine unterstützt wird, insbesondere bei niedrigeren Drehzahlen der angetriebenen Achse. Während des Betriebszustandes "Rekuperieren" wird ebenfalls die elektrische Maschine an die antreibbare Achse angekoppelt. Jedoch wird in diesem Fall ein Drehmoment der sich drehenden Achse auf die elektrische Maschine übertragen, welche somit Bewegungsenergie des Fahrzeugs rekuperieren kann. Vorteil dieser Ausgestaltung ist, dass die elektrische Maschine das Fahrzeug während des Betriebszustandes "Beschleunigen" effizient unterstützt und während des Betriebszustandes des Fahrzeuges "Rekuperieren" kinetische Energie des Fahrzeuges mittels der elektrischen Maschine in elektrische Energie umgewandelt wird.

Auch ist vorgesehen, dass die Klauenkupplung während des Betriebszustandes des Fahrzeugs "Beschleunigen" geschlossen wird. Technischer Hintergrund dieser Ausgestaltung ist, dass der Beschleunigungsvorgang mittels der elektrischen Maschine unterstützt wird, insbesondere bei niedrigen Drehzahlen der angetriebenen Achse. Vorteil dieser Ausgestaltung ist, dass die elektrische Maschine das Fahrzeug während des Betriebszustandes "Beschleunigen" effizient unterstützt.

Erfindungsgemäß wird die Klauenkupplung nach erfolgter Beschleunigung der antreibbaren Achse geöffnet und die elektrische Maschine durch Rekuperation der Rotationsenergie der elektrischen Maschine abgebremst. Technischer Hintergrund und Vorteil dieser Ausgestaltung der Erfindung ist, dass die kinetische Energie der auslaufenden elektrischen Maschine in elektrische Energie umgewandelt wird und nicht verloren geht. Die elektrische Energie kann einer Batterie oder anderen Verbrauchern über das Versorgungsnetz des Fahrzeugs zugeführt werden.

Eine Weiterbildung der Erfindung sieht vor, dass während des Betriebszustandes des Fahrzeugs "Rekuperieren" die Klauenkupplung geschlossen wird. Technischer Hintergrund und Vorteil dieser Ausgestaltung ist, dass die kinetische Energie des Fahrzeugs während des Betriebszustandes des Fahrzeugs "Rekuperieren" mittels der geschlossenen Klauenkupplung durch die elektrische Maschine in elektrische Energie umgewandelt wird und nicht verloren geht. Die elektrische Energie kann einer Batterie oder anderen Verbrauchern über das Versorgungsnetz des Fahrzeugs zugeführt werden.

Eine Weiterbildung der Erfindung sieht vor, dass die Ansteuerung der Klauenkupplung derart vorgenommen wird, dass die Beeinflussung der Drehzahl der antreibbaren Achse minimal ist. Technischer Hintergrund dieser Ausgestaltung ist, dass die mechanische Kopplung während der Ansteuerung der Klauenkupplung nicht übermäßig mechanisch beansprucht wird. Vorteil dieser Ausgestaltung ist, dass der Fahrkomfort während der Ansteuerung der Klauenkupplung nicht beeinflusst wird.

In einer weiteren Weiterbildung der Erfindung ist vorgesehen, dass die elektrische Maschine vor Ansteuerung der Klauenkupplung ein wenig unter oder ein wenig über die Geschwindigkeit der antreibbaren Achse beschleunigt wird. Technischer Hintergrund dieser Ausgestaltung ist, dass dadurch ein sanftes Einkuppeln der Klauenkupplung ermöglicht wird. Vorteil dieser Ausgestaltung sind eine geringe mechanische Belastung der Klauenkupplung sowie ein erhöhter Komfort während der Ansteuerung der Klauenkupplung.

In einer weiteren Weiterbildung der Erfindung ist vorgesehen, dass das Verfahren während des Betriebszustandes des Fahrzeugs "Rekuperieren" und bei Vorliegen eines Ereignissignals, ein Bremsmoment an der antreibbaren Achse erzeugt wird und die Klauenkupplung geöffnet wird. Technischer Hintergrund dieser Ausgestaltung ist, dass während des Betriebszustandes des Fahrzeugs "Rekuperieren" ein zu hohes Bremsmoment, welches insbesondere durch die elektrische Maschine verursacht wird, zu Schlupf an den Antriebsrädern der antreibbaren Achse führt. Dies kann zu einem instabilen fahrdynamischen Fahrverhalten (z.B. Schleudern) des Fahrzeugs führen. Das zu hohe Bremsmoment kann beispielsweise durch einen Fehler im elektrischen Antrieb, insbesondere durch Kurzschliessen der elektrischen Maschine, verursacht sein. Während dieser Situation wird ein hohes Drehmoment über die Klauenkupplung übertragen und ein Öffnen der Klauenkupplung ist daher nicht möglich. Um das Öffnen zu ermöglichen muss das über die Klauenkupplung zu übertragende Drehmoment minimiert oder dessen Richtung geändert werden. Dazu wird die antreibbare Achse, beispielweise mittels der Bremsen der an der antreibbaren Achse angebrachten Antriebsräder, kurz und stark abgebremst. In diesem Moment wird die Klauenkupplung geöffnet und das fehlerhafte Bremsmoment von der antreibbaren Achse entkoppelt. Die Antriebsräder beschleunigen anschließend über die Fahrstraße. Mittels der wieder vorhandenen Haftreibungskraft ist ein fahrdynamisch sicherer Betrieb möglich. Die kurze Abbremsung der antreibbaren Achse erfolgt als Reaktion auf das Vorliegen eines Ereignissignals. Das Ereignissignal wird von einem Steuergerät abgegeben, wenn ein Fehler im elektrischen Antrieb insbesondere ein hohes Bremsmoment an der antreibbaren Achse, welches nicht durch die Bremsen der Antriebsräder verursacht ist) diagnostiziert, die elektrische Maschine ein hohes Bremsmoment aufweist, und/oder bevor die elektrische Maschine kurzgeschlossen wird. Vorteil dieser Ausgestaltung ist, dass dadurch ein sicherer Betrieb des Fahrzeugs auch bei hohem Bremsmoment der elektrischen Maschine gewährleistet wird.

In einer weiteren Weiterbildung der Erfindung ist vorgesehen, dass während der Betriebszustände des Fahrzeuges, während der die elektrische Maschine weder Energie an die antreibbare Achse abgeben noch von der antreibbaren Achse aufnehmen soll, die Klauenkupplung geöffnet wird. Technischer Hintergrund dieser Ausgestaltung ist, dass die elektrische Maschine von der antreibbaren Achse abkoppelbar ist und damit vorteilhafter Weise die träge Masse nicht in jeder Fahrsituation mitgeschleppt oder beschleunigt werden muss. Insbesondere sind das die Betriebszustände des Fahrzeugs, während der die elektrische Maschine weder Energie an die Achse abgeben noch von der antreibbaren Achse aufnehmen soll.

### Ausführungsbeispiele der Erfindung

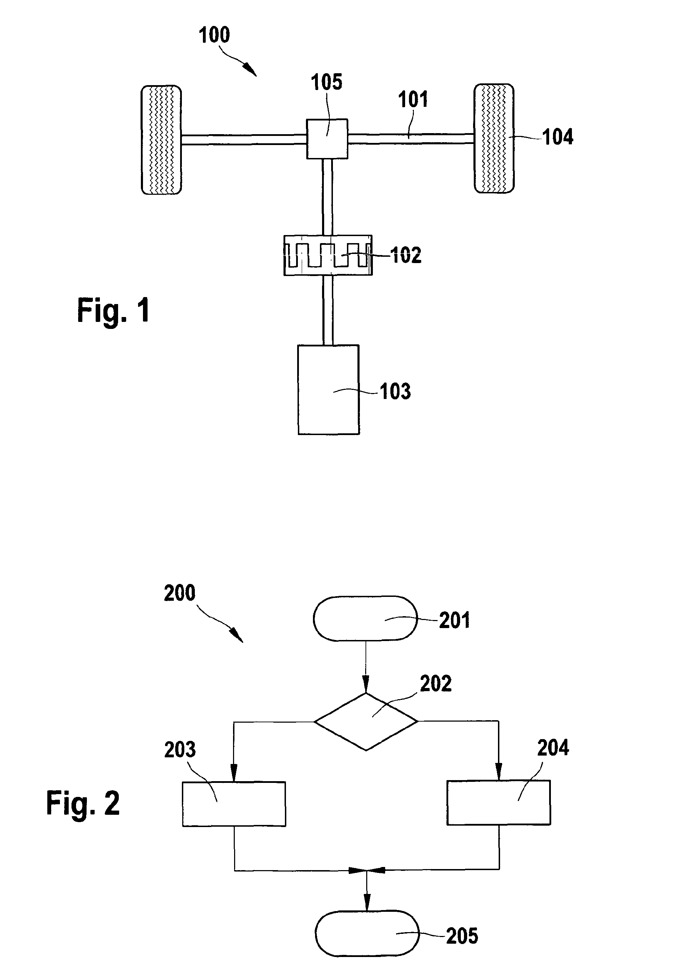

Es zeigt Figur 1
   eine Prinzipdarstellung eines Antriebes mit einer elektrisch antreibbaren Achse.
Figur 2
   ein Verfahren zum Betrieb einer elektrisch antreibbaren Achse.

### Ausführungsformen der Erfindung

Figur 1 zeigt eine Prinzipdarstellung eines Antriebes mit einer elektrisch antreibbaren Achse 100, welche eine elektrische Maschine 103 sowie eine elektrisch antreibbare Achse 101 mit den Antriebsrädern 104 sowie einem Differenzial 105 aufweist. Die mechanische Kopplung zwischen der elektrischen Maschine 103 sowie der elektrisch antreibbaren Achse 101 wird mittels einer Klauenkupplung 102 realisiert. Wenn die Klauenkupplung 102 geschlossen ist, kann ein Drehmoment von der elektrischen Maschine auf die antreibbare Achse oder umgekehrt übertragen werden. Wenn die Klauenkupplung geöffnet ist, kann kein Drehmoment von der elektrischen Maschine auf die antreibbare Achse oder umgekehrt übertragen werden.

Figur 2 zeigt ein Verfahren zum Betrieb einer elektrisch antreibbaren Achse 200. In Schritt 201 wird das Verfahren gestartet. Anschließend wird in Schritt 202 der Betriebszustand des Fahrzeugs abgefragt. In diesem Ausführungsbeispiel kann das System die Betriebszustände "Rekuperieren" und "Beschleunigen" erkennen. Wird entweder der Betriebszustand "Beschleunigen" oder "Rekuperieren" aktuell erkannt, so verzweigt das Verfahren zu Schritt 203 in welchem die Klauenkupplung geschlossen wird. Damit wird sichergestellt, dass ein Drehmoment von der elektrischen Maschine 103 auf die antreibbare Achse 101 über die Klauenkupplung 102 übertragen werden kann oder umgekehrt. Wird in Schritt 202 keiner der beiden Betriebszustände des Fahrzeugs erkannt, so verzweigt das Verfahren zu Schritt 204, in welchem die Klauenkupplung geöffnet wird. So wird sichergestellt, dass kein Drehmoment zwischen der elektrischen Maschine 103 über die Klauenkupplung 102 auf die antreibbare Achse oder umgekehrt übertragen werden kann. Nach der Betätigung der Klauenkupplung 102 in den Verfahrensschritten 204 oder 203 endet das Verfahren mit dem Schritt 205. Während des Betriebes des Fahrzeugs wird dieses Verfahren stets wiederholt.

## Patentansprüche

1. Verfahren für ein Fahrzeug, welches eine elektrische Maschine (103) und eine von dieser elektrischen Maschine (103) antreibbare Achse (101) aufweist, wobei eine trennbare mechanische Kopplung zwischen der antreibbaren Achse (101) und der elektrischen Maschine (103) vorgesehen ist, die als Klauenkupplung (102) ausgebildet ist, welche in Abhängigkeit des Betriebszustandes (202) des Fahrzeugs angesteuert wird, wobei mindestens die Betriebszustände (202) des Fahrzeugs "Beschleunigen" und "Rekuperieren" erkannt werden und während des Betriebszustandes (202) des Fahrzeugs "Beschleunigen" die Klauenkupplung (102) geschlossen wird, **dadurch gekennzeichnet, dass** nach erfolgter Beschleunigung der antreibbaren Achse (101) die Klauenkupplung (102) geöffnet wird und die elektrische Maschine (103) abgebremst wird durch Rekuperation der Rotationsenergie der elektrischen Maschine (103).

2. Verfahren nach Anspruch 1, **dadurch gekennzeichnet, dass** während des Betriebszustandes (202) des Fahrzeugs "Rekuperieren" die Klauenkupplung (102) geschlossen wird.

3. Verfahren nach Anspruch 1, **dadurch gekennzeichnet, dass** die Ansteuerung der Klauenkupplung (102) derart vorgenommen wird, dass die Beeinflussung der Drehzahl der antreibbaren Achse (101) minimal ist.

4. Verfahren nach Anspruch 3, **dadurch gekennzeichnet, dass** die elektrische Maschine (103) vor Ansteuerung der Klauenkupplung (102) ein wenig unter oder ein wenig über die Geschwindigkeit der antreibbaren Achse (101) beschleunigt wird.

5. Verfahren nach Anspruch 1, **dadurch gekennzeichnet, dass** während des Betriebszustandes (202) des Fahrzeugs "Rekuperieren" und bei Vorliegen eines Ereignissignals ein Bremsmoment an der antreibbaren Achse (101) erzeugt und die Klauenkupplung (102) geöffnet wird.

6. Verfahren nach Anspruch 1, **dadurch gekennzeichnet, dass** während der Betriebszustände (202) des Fahrzeugs, während welchen die elektrische Maschine (103) weder Energie an die antreibbare Achse (101) abgeben oder von der antreibbaren Achse (101) aufnehmen soll, die Klauenkupplung (102) geöffnet wird.

## Claims

1. Method for a vehicle which comprises an electric machine (103) and an axle (101) which can be driven by this electric machine (103), wherein a disconnectable mechanical clutch is provided between the drivable axle (101) and the electric machine (103) and is embodied as a dog clutch (102) which is actuated as a function of the operating state (202) of the vehicle, wherein at least the "acceleration" and "recuperation" operating states (202) of the vehicle are detected, and during the "acceleration" operating state (202) of the vehicle the dog clutch (102) is closed,
**characterized in that** after acceleration of the drivable axle (101) has taken place the dog clutch (102) is opened and the electric machine (103) is braked by recuperating the rotational energy of the electric machine (103).

2. Method according to Claim 1, **characterized in that** the dog clutch (102) is closed during the "recuperation" operating state (202) of the vehicle.

3. Method according to Claim 1, **characterized in that** the dog clutch (102) is actuated in such a way that the rotational speed of the drivable axle (101) is influenced to a minimum degree.

4. Method according to Claim 3, **characterized in that** before the dog clutch (102) is actuated the electric machine (103) is accelerated a little below or a little above the speed of the drivable axle (101).

5. Method according to Claim 1, **characterized in that** during the "recuperation" operating state (202) of the vehicle and when an event signal is present a braking torque is generated at the drivable axle (101) and the dog clutch (102) is opened.

6. Method according to Claim 1, **characterized in that** during the operating states (202) of the vehicle during which the electric machine (103) is intended neither to output energy to the drivable axle (101) or to take up energy from the drivable axle (101), the dog clutch (102) is opened.

## Revendications

1. Procédé pour un véhicule, comportant un moteur électrique (103) et un essieu (101) pouvant être entraîné par ce moteur électrique (103), un couplage mécanique séparable pouvant être entraîné étant prévu entre l'essieu (101) et le moteur électrique (103) sous la forme d'un embrayage à griffes (102) commandé en fonction de l'état de fonctionnement (202) du véhicule, au moins les états de fonctionnement (202) du véhicule en mode « accélération » et en mode « récupération » étant reconnus et l'embrayage à griffes (102) étant fermé pendant l'état de fonctionnement (202) du véhicule en mode « accélération », **caractérisé en ce qu'**après une accélération réussie de l'essieu (101) pouvant être entraîné, l'embrayage à griffes (102) est ouvert et que le moteur électrique (103) est freiné par récupération de l'énergie de rotation du moteur électrique (103).

2. Procédé selon la revendication 1, **caractérisé en ce que** l'embrayage à griffes (102) est fermé pendant l'état de fonctionnement (202) du véhicule en mode « récupération ».

3. Procédé selon la revendication 1, **caractérisé en ce que** l'excitation de l'embrayage à griffes (102) est réalisée de façon à minimaliser l'influence de la vitesse de rotation de l'essieu (101) pouvant être entraîné.

4. Procédé selon la revendication 3, **caractérisé en ce qu'**avant d'exciter l'embrayage à griffes (102), le moteur électrique (103) est accéléré un peu en dessous ou en peu au-dessus de la vitesse de l'essieu (101) pouvant être entraîné.

5. Procédé selon la revendication 1, **caractérisé en ce que** pendant l'état de fonctionnement (202) du véhicule en mode « récupération » et en présence d'un signal indiquant un événement, un couple de freinage se produit au niveau de l'essieu (101) et que l'embrayage à griffes (102) est ouvert.

6. Procédé selon la revendication 1, **caractérisé en ce que** l'embrayage à griffes (102) est ouvert dans les états de fonctionnement (202) du véhicule dans lesquels le moteur électrique (103) soit rend de l'énergie à l'essieu (101) pouvant être entraîné soit reçoit de l'énergie de l'essieu (101) pouvant être entraîné.
